# EUROPÄISCHE PATENTSCHRIFT

(11) **EP 0 446 394 B1**
(45) Veröffentlichungstag und Bekanntmachung des Hinweises auf die Patenterteilung: **24.05.1995**
(21) Anmeldenummer: 90104867.8
(22) Anmeldetag: 15.03.1990
(51) Int. Cl.: B29C 70/70, B62D 1/04, B29K 75/00

(54) **Verfahren zur Herstellung von Lenkrädern**
Steering wheel manufacturing process
Procédé pour la fabrication de volants

(43) Veröffentlichungstag der Anmeldung: 18.09.1991
(73) Patentinhaber: Petri AG, D-63704 Aschaffenburg (DE)
(72) Erfinder: Forstmeyer, Egbert, D-8750 Aschaffenburg (DE); Willig, Wolfgang, D-8752 Glattbach (DE)
(74) Vertreter: Eyer, Eckhardt Philipp, Dipl.-Ing.

(56) Entgegenhaltungen:
- DE-A- 3 518 806
- US-A- 2 705 816
- US-A- 4 758 470
- PATENT ABSTRACTS OF JAPAN, Band 10, Nr. 142 (M-481)[2199], 24. Mai 1985;& JP-A-60 264 211 (NIHON HATSUJIYOU K.K.) 27-12-1985

## Beschreibung

Die Herstellung von Lenkrädern mit Kunststoffummantelung erfolgt bisher in der Weise, daß auf ein vorgefertigtes Stahlskelett in einer die Außensollmaße des fertigen Lenkrades aufweisenden Form ein (geschlossenporiger) Polyurethan-Integralschaum aufgebracht wird, der durch entsprechende Führung des Schäumungsvorganges auf der Oberfläche eine die Griff-bzw. Sichtfläche bildende Haut bildet. Bei diesem heute im allgemeinen eingesetzten Verfahren treten einige wesentliche Nachteile auf, so insbesondere eine hohe Ausschußquote im Hinblick darauf, daß die Bildung einer fehlerfreien Außenhaut nicht gewährleistet werden kann, sich vielmehr häufig Blasen oder Schlieren bilden. Ein weiterer Nachteil des bekannten Verfahrens ist auch darin zu sehen, daß mit dem bekannten Verfahren farbige Lenkräder nur sehr schwer hergestellt werden können. Sie erfolgt in der Weise, daß die Form vor der Einbringung des Integralschaumes mit einer Lackschicht der gewünschten Farbe versehen wird, die bei dem Einschäumen des Integralschaumes von der Außenhaut aufgenommen wird. Die Erhaltung einer geschlossenen Färbung über die gesamte Oberfläche bereitet erhebliche Probleme im Hinblick darauf, daß sowohl das ungeschäumte Polymer-Material durch diese Schicht hindurch in das Forminnere gebracht als auch die in der Form enthaltene Luft aus der Form herausgeleitet werden müssen. Einer der wesentlichsten Nachteile dieses Verfahrens ist jedoch auch darin zu sehen, daß die Schäumung des Integralschaumes den Einsatz von Fluor-Chlor-Kohlenwasserstoff als Treibmittel erfordert, das bekanntlich als ein außerordentlich gefährliches Umweltgift anzusehen ist.

Der vorliegenden Erfindung liegt als Aufgabe die Schaffung eines einfachen und umweltverträglichen Verfahrens zur Herstellung von Lenkrädern der beschriebenen Art zugrunde. Diese Aufgabe wird mit einem Verfahren mit den im Patentanspruch 1 beschriebenen Merkmalen gelöst.

Durch die Erfindung ist ein Verfahren geschaffen, das die umweltverträgliche Herstellung der das Lenkradskelett umgebenden Ummantelung ermöglicht insofern, als aufgrund der Struktur des Kernes der Ummantelung als offenporiger Polyurethan-Schaum zur Verschäumung anstelle des bisher erforderlichen Fluor-Chlor-Kohlenwasserstoffes Wasser eingesetzt werden kann. Eine Umweltbelastung wird hierdurch nicht begründet. Als weiterer wesentlicher Vorteile ergibt sich eine erhebliche Verringerung des Produktionsausschusses, da die Bildung von Blasen, Schlieren, Ungleichmäßigkeit der Oberflächenhaut und anderweitige, auf der Oberfläche sichtbare Mängel praktisch ausgeschlossen werden können. Durch diesen Vorteil wird der - gegenüber da bekannten Verfahren - Aufwand für einen zusätzlichen Arbeitsgang ausgeglichen. Hierbei ergibt sich der weitere wesentliche Vorteil, daß auch farbige Lenkräder durch direktes Einfärben des für die Herstellung der Außenhaut verwendeten Polymers in der Masse problemlos hergestellt werden können.

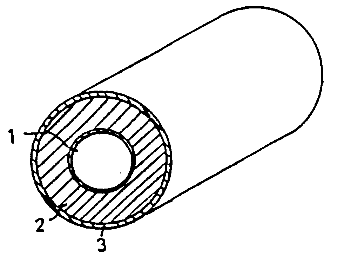

Weitere Ausführungsformen und Vorteile ergeben sich aus der nachfolgenden Beschreibung, in der die Erfindung anhand der beiliegenden Zeichnung beispielsweise erläutert ist.

Die Zeichnung zeigt in einer schematischen Teildarstellung die perspektivische Wiedergabe eines Lenkradkranzes, der aus einem Stahlskelett 1 sowie einer Umhüllung besteht, die aus einem Kern 2 und einer Außenhaut 3 gebildet ist. Hierbei besteht der Kern 2 erfindungsgemäß aus einem offenporigen geschäumten Kunststoffmaterial aus Polyurethan, das in einem ersten Arbeitsgang auf das Skelett in einer Form aufgebracht worden ist, die rundum einen um die der gewünschten Dicke der Außenhaut gegenüber dem Solldurchmesser verringerten Durchmesser aufweist. Hierbei findet zweckmäßig als Material zur Herstellung des Kernes und der Sichtummantelung Polyurethan Verwendung, wobei der Kern 2 und die Sichtummantelung in unterschiedlich vernetzter Modifikation hergestellt werden. So kann in besonders vorteilhafter Weise der Kern 2 mit einem Überschuß an freien OH-Gruppen, d.h. in untervernetzter Modifikation und die Außenhaut 3 in ungeschäumter Form mit einem Überschuß an N-CO-Gruppen, d.h. in übervernetzter Modifikation hergestellt werden, wodurch eine ausgezeichnete Bindungswirkung zwischen den Schichten erzielt wird. Gute Ergebnisse werden jedoch auch in umgekehrter Anordnung erzielt d.h. bei Herstellung des Kernes 2 mit einem Überschuß an N-CO-Gruppen, d.h. in übervernetzter Modifikation und der Außenhaut 3 in ungeschäumter Form mit einem Überschuß an freien OH-Gruppen.

Die Polymerisation der Außenhaut 3 erfolgt in einem gesonderten Arbeitsgang in einer dem Solldurchmesser des Lenkdradteile entsprechenden Form, wobei zur weiteren Verbesserung der Verbindung zwischen dem Kern und der Außenhaut auf den Kern vor da Einbringen in die Form ein die Haftung zwischen beiden Schichten nicht behindernden Trennmittel aufgebracht wird, das eine Offenporigkeit der Oberfläche erzeugt und damit eine zusätzliche Verankerung der Außenhaut bewirkt.

Anstelle der direkten Aufschäumung des Kernes auf das Skelett in einer Form kann der Kern aus vorgeschäumten Folien vorgefertigt und durch thermoplastische Verformung oder Schweißen auf das Skelett aufgebracht werden, Ebenso wie eine Vorfertigung des Kernes durch Spritzen aus thermoplastischen Material Aufbringung auf das Skelett durch Schweißen möglich ist.

## Patentansprüche

1. Verfahren zur Herstellung von Lenkrädern mit einem metallischen Skelett und einer auf das Skelett aufgeschäumten Ummantelung aus Kunststoff, dadurch gekennzeichnet, daß in einem ersten Arbeitsgang auf das Skelett ein Kern aus einem offenporigen geschäumten Kunststoffmaterial und danach auf das so vorbereitete Lenkrad in einem zweiten Arbeitsgang in einer Sollmaße aufweisenden Form unter Zwischenschaltung eines die Haftung zwischen beiden Schichten nicht behindernden Trennmittels eine Sichtummantelung aus ungeschäumtem Kunststoff aufgebracht werden.

2. Verfahren nach Anspruch 1, dadurch gekennzeichnet, daß als Material zur Herstellung des Kernes und der Sichtummantelung Polyurethan Verwendung findet, wobei der Kern und die Sichtummantelung in unterschiedlich vernetzter Modifikation hergestellt werden.

3. Verfahren nach Anspruch 2, dadurch gekennzeichnet, daß als Material zur Herstellung des Kernes und der Sichtummantelung Polyurethan Verwendung findet, wobei der Kern mit einem Überschuß an freien OH-Gruppen, d.h. in untervernetzter Modifikation und die Sichtummantelung mit einem Überschuß an N-CO-Gruppen, d.h. in übervernetzter Modifikation hergestellt werden.

4. Verfahren nach einem der Ansprüche 1 bis 3, dadurch gekennzeichnet, daß der Kern in einer rundum gleichmäßig einen unter Sollmaß liegenden Durchmesser aufweisenden Form unmittelbar auf das Skelett aufgeschäumt wird.

5. Verfahren nach einem der Ansprüche 1 bis 3, dadurch gekennzeichnet, daß der Kern aus vorgeschäumten Folien vorgefertigt und durch thermoplastische Verformung oder Schweißen auf das Skelett aufgebracht wird.

6. Verfahren nach einem der Ansprüche 1 bis 3, dadurch gekennzeichnet, daß der Kern durch Spritzen aus thermoplastischen Material vorgefertigt und durch Verformung oder Schweißen auf das Skelett aufgebracht wird.

## Claims

1. Method of producing steering wheels with a metallic skeleton and a plastics material covering, which is foam-expanded onto the skeleton, characterised in that, in a first operation, a core formed from an open-pored, foamed plastics material is applied to the skeleton, and then, in a second operation, a visible cover formed from unfoamed plastics material is applied to the steering wheel thus prepared in a form having desired dimensions with the interposition of a parting compound which does not prevent the adhesion between both layers.

2. Method according to claim 1, characterised in that polyurethane is used as the material for the production of the core and the visible cover, the core and the visible cover being produced in a variably cross-linked modification.

3. Method according to claim 2, characterised in that polyurethane is used as the material for the production of the core and the visible cover, the core being produced with an excess of free OH groups, i.e. in a sub-cross-linked modification, and the visible cover being produced with an excess of N-CO groups, i.e. in an over-cross-linked modification.

4. Method according to one of claims 1 to 3, characterised in that the core is foam-expanded directly onto the skeleton in a form having a diameter of less than the desired dimension uniformly in all directions.

5. Method according to one of claims 1 to 3, characterised in that the core is prefabricated from pre-foamed films and applied to the skeleton by thermoplastic deformation or welding.

6. Method according to one of claims 1 to 3, characterised in that the core is prefabricated from thermoplastic material by injection-moulding and applied to the skeleton by deformation or welding.

## Revendications

1. Procédé de fabrication de volants de direction comportant un squelette métallique et une gaine en matière plastique appliquée a l'état de mousse sur ce squelette, caractérisé en ce que, dans une première étape de travail, une âme en une matière plastique moussée à pores ouverts est appliquée sur le squelette, après quoi, dans une seconde étape de travail, une enveloppe visible, en matière plastique non moussée, est appliquée sur le volant ainsi préparé, dans un moule présentant les dimensions requises, avec interposition d'un agent de separation qui n'entrave pas l'adhérence entre les deux couches.

2. Procédé selon la revendication 1, caractérisé en ce qu'on utilise un polyuréthanne comme matériau pour la fabrication de l'âme et de l'enveloppe visible, l'âme et l'enveloppe visible étant fabriquées dans des variétés réticulées différemment.

3. Procédé selon la revendication 2, caractérisé en ce qu'on utilise un polyuréthanne comme matériau pour la fabrication de l'âme et de l'enveloppe visible, l'âme étant fabriquée avec un excès de groupement OH libres, c'est-à-dire en une variété hyporéticulée, et l'enveloppe visible étant fabriquée avec un excès de groupements N-CO, c'est-à-dire en une variété hyperréticulée.

4. Procédé selon l'une quelconque des revendications 1 à 3, caractérisé en ce que l'âme est appliquée directement sur le squelette à l'état de mousse dans un moule qui présente, uniformément tout autour, un diamètre inférieur à la dimension prescrite.

5. Procédé selon l'une quelconque des revendications 1 à 3, caractérisé en ce que l'âme est préfabriquée à partir de feuilles prémoussées et est appliquée sur le squelette par déformation thermoplastique ou par soudage.

6. Procédé selon l'une quelconque des revendications 1 à 3, caractérisé en ce que l'âme est préfabriquée par pulvérisation à partir de matière thermoplastique et est appliquée sur le squelette par déformation ou par soudage.
